# EUROPEAN PATENT APPLICATION

(11) **EP 2 111 049 A2**
(43) Date of publication of application: **21.10.2009**
(21) Application number: 08019856.7
(22) Date of filing: 13.11.2008
(51) Int. Cl.: H04N 13/00

(54) **Rendering a multiple viewpoint image into a single frame buffer using off-screen rendering surfaces**

(30) Priority: 18.04.2008 US 106059
(71) Applicant: Seiko Epson Corporation, Tokyo 163-0811 (JP)
(72) Inventor: Swaminathan, Vasanth, Mississauga ON L5M 4K8 (CA); Sellers, Graham, Toronto ON M4J 4L7 (CA)
(74) Representative: Grünecker, Kinkeldey, Stockmair & Schwanhäusser Anwaltssozietät

(57) **Abstract**

A method and apparatus for rendering multiple viewpoint image data into a single physical frame buffer are described. One example method includes storing image data corresponding to different viewpoints on different virtual buffers, processing the image data stored on the virtual buffers, then blending the image data and storing the blended image data in a physical frame buffer. The blended image data may then be transferred to a multi-viewpoint display, such as an autostereoscopic display. Storing image data on virtual buffers may include rendering the image data into a texture using graphics library functions, such as OpenGL frame buffer object extension functions.

## Description

### BACKGROUND

### 1. The Field of the Invention

The present invention relates to rendering multiple viewpoint images. More specifically, embodiments of the present invention relate to methods and systems for rendering multiple viewpoint images using a frame buffer and rendering surfaces or textures.

### 2. The Relevant Technology

Multiple viewpoint images may include three-dimensional images such as anaglyphs (typically viewed with red/blue or red/green lenses) and autostereoscopic images (viewed without the aid of special glasses or other headgear). Multiple viewpoint images may also include images that do not cooperate to produce a three dimensional effect. For example, an appropriately configured display in a car might show a map from the driver's viewpoint while showing a movie from the passengers' viewpoint. Such multiple viewpoint displays are typically configured with a parallax barrier, which serves to selectively block different pixels depending on the viewpoint.

Conventional multiple viewpoint rendering techniques typically require a separate physical frame buffer corresponding to each viewpoint rendered. Maintaining separate physical frame buffers facilitates post-processing of individual viewpoints before the viewpoints are combined appropriately for display. For example, a user or image editor may wish to blur one or more of the multiple viewpoints. If the unprocessed viewpoints are simply combined in a single physical frame buffer, neighboring pixels would correspond to different images. Blurring one or more of the viewpoints could not be achieved then because, like many other image processing techniques, blurring alters individual pixel values based on neighboring pixel values. On the other hand, if multiple physical frame buffers are used, a conventional blurring process (or other image processing techniques) can be applied on the corresponding physical frame buffers without undue influence from pixels in any other viewpoints.

Implementations that use multiple physical frame buffers have certain drawbacks, however. For example, the most widely available video cards and graphics library implementations support single viewpoint displays and, therefore, do not support multiple physical frame buffers. Moreover, video cards with multiple physical frame buffers are made specifically for use with one output mode and, therefore, cannot easily be adapted for different types of multi-viewpoint displays (e.g., anaglyph, parallax barrier, two-viewpoint, three-viewpoint, etc.).

Methods and apparatuses for cheaply rendering multiple viewpoint images on a variety of types of multi-viewpoint displays are, therefore, desirable.

### BRIEF SUMMARY

One example embodiment of the present invention is directed to a method for rendering multiple viewpoint images. The method includes storing image data corresponding to different viewpoints on different virtual buffers, processing the image data stored on the virtual buffers, blending the image data and then storing the blended image data in a physical frame buffer. The blended image data may then be transferred to a multi-viewpoint display. Storing image data on virtual buffers may include rendering the image data into a texture using graphics library functions, such as OpenGL frame buffer object extension functions.

In addition to the method of rendering multiple viewpoint images, another example embodiment is directed to an apparatus for rendering multiple viewpoint images. The example apparatus includes virtual frame buffers adapted to receive image data corresponding to different viewpoints. The apparatus also includes a programmable device adapted to blend image data received by the virtual frame buffers and a physical frame buffer adapted to receive the blended image data from the programmable blending module.

Illustrated embodiments thus provide several advantages over the prior art. Instead of rendering each viewpoint to a separate physical frame buffer, the proposed invention uses virtual frame buffers for post-processing each viewpoint. Hence, disclosed embodiments facilitate post-processing of multiple viewpoints without the need for multiple physical frame buffers. As such, embodiments of the proposed invention can be used with common hardware and graphics libraries and can be adapted for different multi-viewpoint output modes. The ability to render multiple viewpoint images on a variety of types of multi-viewpoint displays therefore provided, and is done so in a cost-effective manner.

This Summary is provided to introduce a selection of concepts in a simplified form that are further described below in the Detailed Description. This Summary is not intended to identify key features or essential characteristics of the claimed subject matter, nor is it intended to be used as an aid in determining the scope of the claimed subject matter.

Additional features and advantages will be set forth in the description which follows, and in part will be obvious from the description, or may be learned by the practice of the teachings herein. Features of the invention may be realized and obtained by means of the instruments and combinations particularly pointed out in the appended claims. Features of the present invention will become more fully apparent from the following description and appended claims, or may be learned by the practice of the invention as set forth hereinafter.

### BRIEF DESCRIPTION OF THE DRAWINGS

To further clarify the features of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specificity and detail through the use of the accompanying drawings in which:

Figure 1 illustrates a system for displaying multiple viewpoint image data for use with the present invention;

Figure 2 illustrates pixel patterns for use with a two viewpoint autostereoscopic display having color channels interleaved together, in accordance with the present invention; and

Figures 3A and 3B illustrate image processing methods that may be implemented by the system of Figure 1.

### DETAILED DESCRIPTION

In the following detailed description of various embodiments of the invention, reference is made to the accompanying drawings which form a part hereof, and in which are shown by way of illustration specific embodiments in which the invention may be practiced. It is to be understood that other embodiments may be utilized and structural changes may be made without departing from the scope of the present invention.

The following description provides an example embodiment of a method and apparatus for rendering multiple viewpoint images for use with a multi-viewpoint display. The illustrated embodiment facilitates post-processing of multiple viewpoints without using multiple physical frame buffers. As such, the proposed invention can be used with common hardware and graphics libraries and can be adapted for different multi-viewpoint output modes. Instead of rendering each viewpoint to a separate physical frame buffer, the proposed invention uses virtual frame buffers for post-processing each viewpoint.

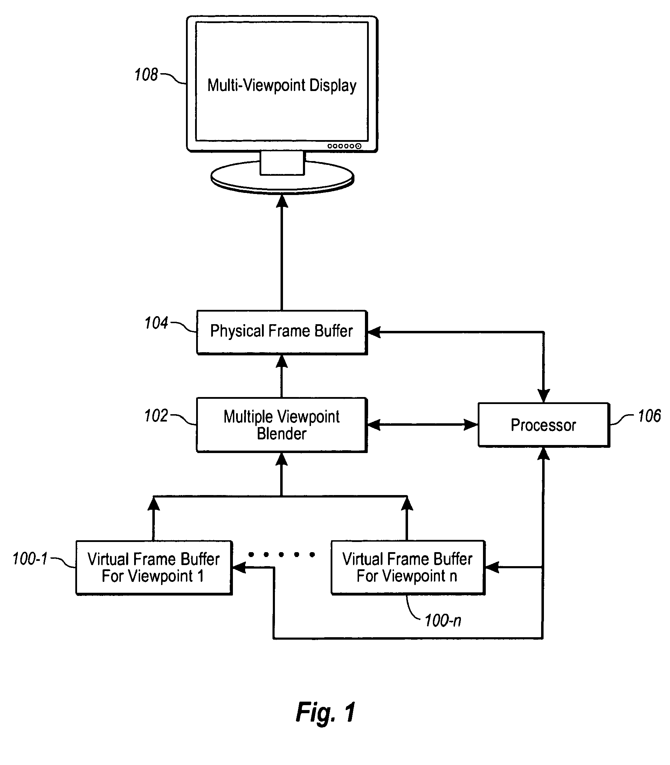

**Figure 1** shows a system for displaying multiple viewpoint image data. The system may include a set of virtual frame buffers 100-1 through 100-n, where n is any integer greater than 1, a multiple viewpoint blender 102, a physical frame buffer 104, a processor 106, and a multi-viewpoint display 108. Each of the components in the system may cooperate together to display multiple viewpoint image data on display 108. The various components may be separate entities linked together via cables, pluggable interfaces, wireless connections, etc., or any combination thereof. In one embodiment, virtual frame buffers 100-1 through 100-n, multiple viewpoint blender 102, physical frame buffer 104, and processor 106 may be integrated together and form a single apparatus, e.g., a computer or a video card, that is programmable to be compatible with a variety of display types or modes.

Display 108 may be a common single-viewpoint display or it may be specially equipped for multiple-viewpoint image data. Moreover, display 108 may be adapted to receive and display a static image (e.g., a programmable picture frame) or streams of image data frames (e.g., a television, monitor, or video projector).

Raw image data (i.e., not yet blended) may be received by the system of **Figure 1** via a variety of sources. For example, a camera with multiple lenses or multiple cameras may supply the raw image data, each camera or lens supplying a different viewpoint. Alternatively, the different viewpoints may be artificially synthesized from the raw image data of a single camera. In another embodiment, the raw image data may be computer generated graphics imported or locally generated by, for example, processor 106 or similar processor(s). Moreover, raw image data may be imported or downloaded via a network connection, such as an Internet connection. Regardless of how the raw image data is generated or received, it may first be stored in virtual frame buffers 100-1 through 100-n. This may be accomplished by, e.g., rendering the raw image data file into a texture or surface. Texture rendering may be a function that is provided by a graphics library or application programming interface (API) such as OpenGL or an extension thereof, such as a frame buffer object extension.

Virtual frame buffers 100-1 through 100-n may be implemented as, for example, a memory device or a portion thereof designated for storing a data produced by a render to texture function. The memory device may be a RAM device, such as video card RAM, a flash memory device, an EEPROM device, or other storage device which can be used to carry or store image data. In addition, the memory device may be external to or integrated with the apparatus on which processor 106 is implemented and/or on which multiple viewpoint blender 102 is implemented.

Processor 106 may be a processor and/or controller equipped to control the operations of and access to one or more of virtual frame buffers 100-1 through 100-n, multiple viewpoint blender 102, and physical frame buffer 104. Thus, the bidirectional arrows flowing to and from processor 106 may represent data and/or controls or commands. Processor 106 may be implemented, for example, as a general purpose microprocessor or an application specific microprocessor. Moreover, in one embodiment the functions of processor 106 may be performed by multiple viewpoint blender 102 by, for example, integrating processor 106 with multiple viewpoint blender 102 in a single processor/controller.

As one of its functions, processor 106 may apply post-processing effects to image data stored in one or more of virtual frame buffers 100-1 through 100-n. For example, it may desirable to perform a variety of different image processing operations on the image data stored one or more of the buffers, such as changing hue, brightness, contrast, binary or grey thresholding, smoothening, sharpening, etc. Certain operations may be desirable to simulate an imaging artifact of a real-world camera, e.g., a blur effect or a bloom effect. By performing the image processing operations on individual viewpoints the image data in one viewpoint does not unduly influence the image data in another viewpoint. In one embodiment the image processing operations may be performed before storing the image data on a virtual frame buffer. For example, an image processing operation may be performed before or as part of a render to texture function. Alternatively, image processing operations may be performed after a render to texture function. In addition, image processing operations may be provided by a graphics library or API such as OpenGL.

Once individual viewpoints of image data has been processed, the viewpoints may be combined or blended by multiple viewpoint blender 102. Multiple viewpoint blender 102 may blend the contents of the virtual buffers according to a desired output mode. In addition, multiple viewpoint blender 102 may be programmable such that a blending algorithm can readily be replaced to support different types of displays.

For example, one blending algorithm may correspond to a red/blue anaglyph display. In this mode, only two virtual frame buffers may be used, one corresponding to a left viewpoint (a left virtual frame buffer) and the other to a right viewpoint (a right virtual frame buffer). Using image processing functions available in OpenGL or other graphics libraries, image data in the left virtual frame buffer may be filtered to select only the red channel of image data and image data in the right virtual frame buffer may be filtered to select only the blue channel of image data. The resulting red image may be transferred or copied to the red channel of physical frame buffer 104 and the resulting blue image may be transferred or copied to the blue channel of physical frame buffer 104. As a result, the red and blue components of images displayed on display 108 may correspond to the left and right viewpoints, respectively, and the displayed images may thus appear three-dimensional when viewed with 3-D red/blue lenses. A similar process may be implemented for compatibility with red/green lenses, i.e., instead of filtering the blue channel of image data a green channel of image data may be filtered. Without changing any hardware, a blending algorithm applied by multiple viewpoint blender 102 may simply be updated via an upload operation to change filtering from blue to green in the right virtual frame buffer.

Similarly, a blending algorithm may be updated for compatibility with an autostereoscopic display, without changing hardware (other than display type). One type of auto stereoscopic display uses a parallax barrier. In a typical autostereoscopic display having two viewpoints, the output image consists of interleaved color channels.

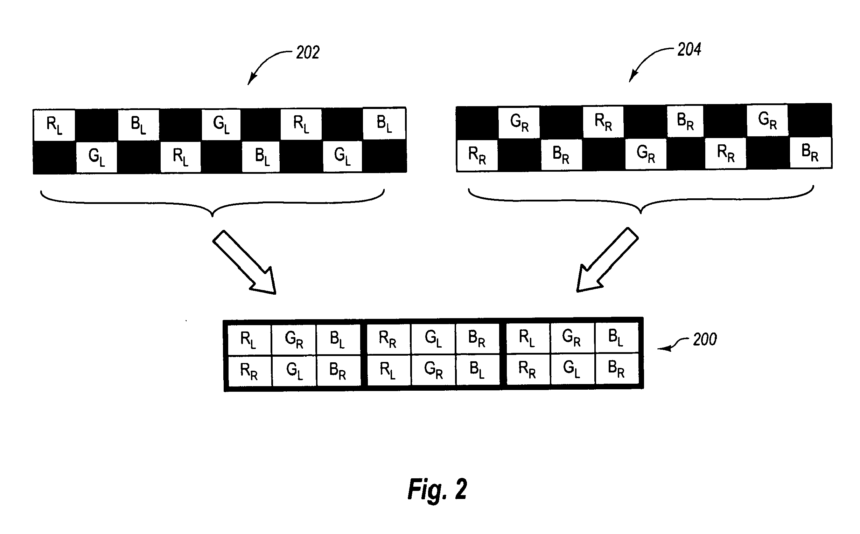

**Figure 2** shows various pixel patterns for use with an autostereoscopic display having two viewpoints with interleaved color channels. Pattern 200 represents a portion of a two-viewpoint autostereoscopic display, which may be formed using masked patterns 202 and 204. Each square in the patterns is a component of an image pixel, R representing a red component, G for green, and B for blue. As in a non-autostereoscopic display, each pixel in an autostereoscopic display may be represented by a red component, a green component, and a blue component grouped closely to blend together when viewed by the human eye. In an autostereoscopic display, however, the pixel components of different viewpoints may be interleaved together. A parallax barrier may block the right viewpoint's pixel components when the display is viewed from a left perspective and may block the left viewpoint's pixel components when the display is viewed from a right perspective. (A similar pattern and corresponding parallax barrier can be used for autostereoscopic displays with more than two views.) Thus, in patterns 200, 202, and 204, a pixel component having subscript L corresponds to a left viewpoint and a pixel component having subscript R corresponds to a right viewpoint and pattern 200 may be repeated to extend across an entire display.

To produce an output image for a two-viewpoint autostereoscopic display, two virtual frame buffers may be used. A left viewpoint image or frame stored on one of the virtual frame buffers may be bound or modulated (e.g., using OpenGL functions) with a left viewpoint mask, i.e., a texture that contains a value of one in the left viewpoint pixel components and zero elsewhere. This operation may produce a multi-colored checkerboard pattern such as pattern 202. The right viewpoint image may be similarly processed with a right viewpoint mask, i.e., a texture that contains a value of one in the right viewpoint pixel components and zero elsewhere. Pattern 204 may be the result of this operation. An output image may then be produced as pattern 200 by additively blending patterns 202 and 204 into physical frame buffer 104.

Referring again to **Figure 1**, physical frame buffer 104 may be a memory device or a portion thereof designated for storing a data produced by multiple viewpoint blender 102. The memory device may be a RAM device, such as video card RAM, a flash memory device, an EEPROM device, or other storage device which can be used to carry or store image data. In addition, the memory device may be external to or integrated with the apparatus on which processor 106 is implemented and/or on which multiple viewpoint blender 102 is implemented. In one embodiment physical frame buffer 104 is a RAM buffer on a video card adapted for direct interface with a display. In certain embodiments physical frame buffer 104 is the sole or single frame buffer on the video card. Thus, different viewpoints may be blended prior to storage of image data in physical frame buffer 104 by a processor such as multiple viewpoint blender 102, as opposed to being blended after storage of image data in multiple physical frame buffers by a processor in an attached display.

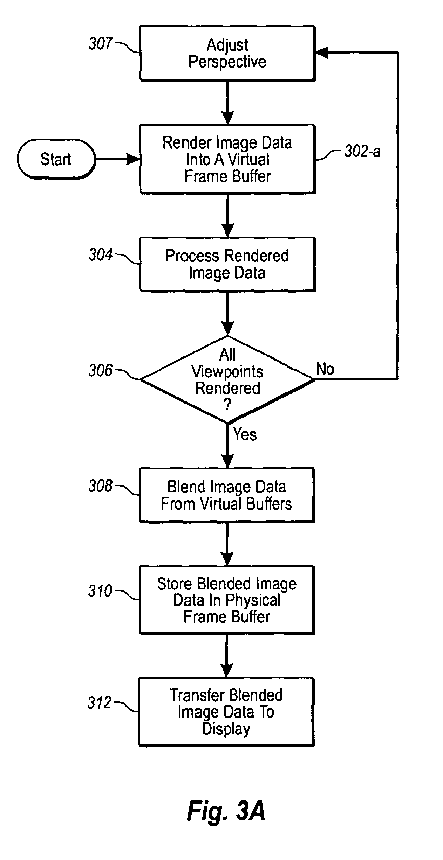

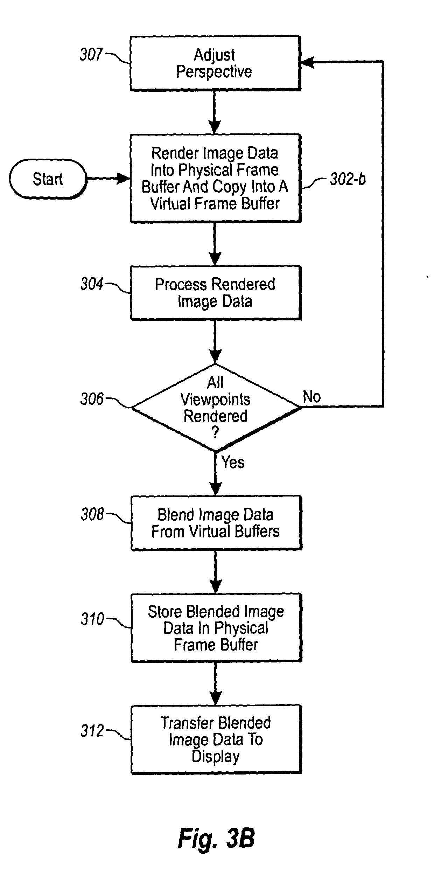

**Figures 3A** **and** **3B** each show a method that may be implemented by processor 106 and/or multiple viewpoint blender 102. In **Figure 3A**, raw image data corresponding to a first viewpoint may be received and rendered into a texture, the texture being stored in a first virtual frame buffer, e.g., virtual frame buffer 100-1 (stage 302-a). Then, post-processing may be performed on the contents of the first virtual frame buffer, i.e., on the texture stored therein (stage 304). The same operations may then be repeated for a second viewpoint of image data and, if necessary, for additional viewpoints of image data. Once all viewpoints have been rendered (stages 306 and 307), the image data from each virtual frame buffer may be blended (stage 308). As described above, the blend algorithm used may be programmable to be compatible with a particular display type or mode. Next, the blended image data may be stored in a physical frame buffer, such as physical frame buffer 104 (stage 310) and then transferred at a particular time and rate to a display, such as display 108 (stage 312).

The method shown in **Figure 3B** may be executed instead of the method shown in **Figure 3A**. In **Figure 3B** each stage is the same except stage 302-a is replaced with stage 302-b. Stage 302-b differs in that data is rendered to a physical frame buffer, then copied into a virtual frame buffer. This alternative may be preferable if, for example, the particular hardware, e.g., video card, and/or graphics API used to execute the method does not support certain functions such as rendering a texture to a virtual frame buffer. Thus, the method of **Figure 3B** may be used to accomplish the same or similar results as the method of **Figure 3A****.**

Stages of **Figures 3A** **and** **3B** may be modified in various ways. For example, the order of stages may be varied, certain stages may be omitted and/or additional stages may be added. The stages may be implemented or may occur at the same frequency or at differing frequencies. For example, the order of stages 302-a (or 302-b), 304, and 306 may be rearranged and/or combined. In one embodiment, stage 304 may precede stage 302-a (or 302-b). thus, image data may be processed before or as part of the rendering stage. In another embodiment stage 306 may precede stage 304. Thus, image data may be processed in each virtual frame buffer after each perspective has been rendered.

Embodiments herein may comprise a special purpose or general-purpose computer including various computer hardware implementations. Embodiments may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media.

Computer-executable instructions comprise, for example, instructions and data which cause a general purpose computer, special purpose computer, or special purpose processing device to perform a certain function or group of functions. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A method for rendering multiple viewpoint images, the method comprising:
storing image data corresponding to a first viewpoint in a first buffer;
storing image data corresponding to a second viewpoint in a second buffer;
processing the image data in at least one of the first and second buffers;
blending the image data corresponding to the first and second viewpoints to produce blended image data;
storing the blended image data in a third buffer; and
transferring the blended image data to a multi-viewpoint display.

2. The method of claim 1, wherein at least one of the first, second, and third buffers is RAM on a video processing card.

3. The method of claim 1, wherein storing the first and/or second viewpoint image data includes rendering the image data into a texture.

4. The method of claim 3, wherein rendering image data into a texture includes executing an OpenGL function associated with an OpenGL frame buffer object extension.

5. The method of claim 1, wherein processing the image data includes at least one of:
smoothing the image data, sharpening the image data, changing contrast of the image data, blurring the image data, and simulating an imaging artifact of a real-world camera in the image data.

6. The method of claim 1, wherein storing the first viewpoint image data includes rendering the first viewpoint image data into the third buffer and copying the first viewpoint image data to the first buffer, and
wherein storing the second viewpoint image data includes storing the second viewpoint image data in the third buffer and copying the second viewpoint image data to the second buffer.

7. The method of claim 1, wherein blending the image data includes interleaving image data in the first buffer with image data in the second buffer.

8. The method of claim 7, wherein interleaving the image data includes interleaving color components of image data in the first buffer with color components of image data in the second buffer.

9. The method of claim 1, wherein blending the image data includes filtering image data in the first and second buffers and combining the filtered image data to generate an anaglyph image.

10. An apparatus comprising:
a first buffer adapted to receive image data corresponding to a first viewpoint;
a second buffer adapted to receive image data corresponding to a second viewpoint;
a programmable device adapted to blend the image data received by the first buffer with the image data received by the second buffer; and
a third buffer adapted to receive the blended image data from the programmable blending module.

11. The apparatus of claim 10, further comprising:
an image processing device adapted to process image data stored in at least one of the first and second buffers.

12. The apparatus of claim 10, wherein the first and second buffers are virtual frame buffers.

13. The apparatus of claim 10, wherein the third buffer is a physical frame buffer.

14. The apparatus of claim 10, wherein the programmable device is programmable to be compatible with a plurality of stereoscopic display types.

15. The apparatus of claim 10, wherein the programmable device is programmed to interleave image data in the first buffer with image data in the second buffer.

16. The apparatus of claim 10, wherein the programmable device is programmed to filter image data in the first and second buffers and to then combine the filtered image data to generate an anaglyph image.
